# FASCICULE DE BREVET EUROPEEN

(11) **EP 3 378 364 B1**
(45) Date de publication et mention de la délivrance du brevet: **25.12.2019**
(21) Numéro de dépôt: 18162662.3
(22) Date de dépôt: 19.03.2018
(51) Int. Cl.: A47J 37/06, A47J 37/12

(54) **APPAREIL DE CUISSON MUNI D'UN MECANISME A BRAS ARTICULÉS**
KOCHGERÄT MIT GELENKARMMECHANISMUS
COOKING APPARATUS PROVIDED WITH A MECHANISM WITH ARTICULATED ARMS

(30) Priorité: 22.03.2017 FR 1752343
(43) Date de publication de la demande: 26.09.2018
(73) Titulaire: SEB S.A., 69130 Ecully (FR)
(72) Inventeur: MUGNIER, Cédric, 21120 PICHANGES (FR); LORDONNOIS, Rodolphe, 21000 DIJON (FR)
(74) Mandataire: Soares, Luis Filipe

(56) Documents cités:
- EP-A1- 2 613 679
- WO-A1-2015/028911
- CN-U- 204 091 768
- CN-Y- 2 253 941
- DE-U1-202014 103 133

## Description

### Domaine technique

La présente invention concerne les appareils de cuisson comprenant une enceinte de cuisson, un support configuré pour recevoir directement ou indirectement des aliments à cuire et un mécanisme configuré pour guider le support vers l'extérieur de l'enceinte afin de positionner les aliments à cuire ou de les retirer après cuisson et, inversement, pour guider le support vers l'intérieur de l'enceinte afin de cuire les aliments.

Dans une réalisation principale, un tel appareil de cuisson consistera en une friteuse électrique. Celui-ci peut toutefois consister en un four, selon une autre réalisation, voire d'autres appareils de cuisson.

### Etat de la technique

Un tel appareil de cuisson, consistant en une friteuse, est par exemple décrit dans la demande de brevet publiée sous le numéro WO2015028911A1.

Traditionnellement, comme cela apparaît dans la demande précitée, un mécanisme permet de guider le support vers l'extérieur de l'enceinte ou inversement à la manière d'un tiroir, en le faisant glisser vis-à-vis du socle définissant l'enceinte.

Un tel tiroir nécessite bien souvent la mise en œuvre de systèmes de glissière à billes pour réduire les frottements durant le déplacement du tiroir sur lequel est embarqué le support recevant un récipient amovible qui permet de contenir les aliments.

Ces systèmes de glissière sont parfois très coûteux et nécessitent en outre des rails de support métalliques pour une reprise des efforts robustes entre le support et l'enceinte.

Par ailleurs, ces systèmes de glissière impliquent de prévoir des longueurs plus importantes des rails tant à l'avant qu'à l'arrière dans l'enceinte, ce qui induit des contraintes fortes sur l'esthétisme de l'appareil de cuisson.

### Résumé de l'invention

La présente invention pallie les inconvénients précités en concevant un appareil de cuisson dont le mécanisme s'affranchit des systèmes de glissière traditionnels.

A ce titre, selon l'invention, l'appareil de cuisson comprend une enceinte de cuisson, un support configuré pour recevoir directement ou indirectement des aliments à cuire et un mécanisme configuré pour guider le support vers l'extérieur de l'enceinte selon une trajectoire rectiligne, notamment lors d'une traction sur le support et, inversement, vers l'intérieur de l'enceinte, notamment lors d'une poussée sur ledit support. On entend par « directement » le fait que les aliments soient disposés sur le support sans aucun intermédiaire, par exemple une plaque d'un four électrique. On entend au contraire par « indirectement » le fait que les aliments soient disposés dans un récipient rapporté sur le support, par exemple un plat posé sur un support (plaque ou grille) d'un four ou un récipient posé sur un support d'une friteuse, le récipient contenant un peu d'huile de friture.

De manière remarquable, le mécanisme comprend :
- au moins un premier bras articulé dont une première extrémité est montée en liaison pivot selon un premier axe vis-à-vis de l'enceinte et une seconde extrémité est montée en liaison pivot selon un second axe vis-à-vis du support, lesdits premier et second axes étant parallèles entre eux et définis respectivement dans des premier et second plans perpendiculaires à la trajectoire rectiligne,
- au moins un second bras articulé dont une première extrémité est montée en liaison pivot selon un troisième axe vis-à-vis de l'enceinte et une seconde extrémité est montée en liaison pivot selon un quatrième axe vis-à-vis du support, lesdits troisième et quatrième axes étant parallèles entre eux et définis respectivement dans des troisième et quatrième plans perpendiculaires à la trajectoire rectiligne,
- les premier et second axes étant inclinés par rapport aux troisième et quatrième axes.

Cette conception du mécanisme permet d'assurer un déploiement de l'au moins un premier bras articulé et de l'au moins un second bras articulé lorsque le support est dégagé de l'enceinte, en bloquant tous les degrés de liberté entre le support et l'enceinte excepté celui correspondant à la trajectoire rectiligne de déplacement du support. Grâce à l'inclinaison des premier et second axes vis-à-vis des troisième et quatrième axes et à la disposition de ces quatre axes respectivement dans quatre plans parallèles entre eux, le déplacement du support s'effectue perpendiculairement auxdits plans, selon la trajectoire rectiligne, sans nécessiter la présence de système de glissière. Cette inclinaison permet également une reprise des efforts dus à la charge du support et des éléments qu'il reçoit (plaque ou récipient et aliments).

Dans une réalisation préférentielle de l'appareil de cuisson, les premier et second axes sont sensiblement perpendiculaires aux troisième et quatrième axes. Cela assure une stabilité optimale du support durant son déplacement dans le sens de la trajectoire rectiligne. Dans une réalisation préférentielle de l'appareil de cuisson, les premier et second axes sont sensiblement verticaux et les troisième et quatrième axes sont sensiblement horizontaux. On pourrait toutefois envisager d'autres orientations de ces axes selon la forme de l'enceinte et du support, de préférence en conservant les premier et second axes perpendiculaires aux troisième et quatrième axes.

Dans une réalisation préférentielle, l'appareil de cuisson comprend deux premiers bras articulés et un second bras articulé. De préférence, les deux premiers bras articulés sont positionnés respectivement sur les côtés latéraux entre l'enceinte et le support et le second bras articulé est positionné sur le côté arrière entre l'enceinte et le support. Cela permet une répartition homogène des efforts exercés par le support et les éléments qu'il reçoit (plaque, récipient, plat ... et les aliments) sur le contour de l'enceinte et par rapport à la trajectoire rectiligne. Dans une réalisation, les deux premiers bras sont incurvés, ce qui permet de former convenablement l'enceinte de chauffe autour d'un récipient disposé sur le support lorsque ledit support est engagé dans ladite enceinte, évitant ainsi l'ajout d'un écran thermique additionnel comme cela est le cas sur les appareils de cuisson de l'art antérieur.

Dans une réalisation de l'appareil de cuisson, l'au moins un premier bras articulé comprend au moins deux premières parties en liaison pivot entre elles selon au moins un cinquième axe. Les premier et second axes et l'au moins un cinquième axe sont parallèles entre eux. Dans une réalisation préférentielle, l'au moins un premier bras articulé est constitué de deux premières parties articulées entre elles selon un cinquième axe.

Dans une réalisation de l'appareil de cuisson, l'au moins un second bras articulé comprend au moins deux secondes parties en liaison pivot entre elles selon au moins un sixième axe. Les troisième et quatrième axes, et l'au moins un sixième axe sont parallèles entre eux. Dans une réalisation préférentielle, l'au moins un second bras articulé est constitué de trois secondes parties articulées respectivement entre elles selon deux sixièmes axes.

Des variantes de premiers bras articulés et de seconds bras articulés pourraient être envisagées. Il serait par exemple possible de concevoir un premier bras articulé de type télescopique à croisillons, de même pour le second bras.

Dans une réalisation de l'appareil de cuisson, le mécanisme comprend des moyens d'appui configurés entre le support et l'enceinte pour reprendre les efforts exercés sur les bras articulés en fin de course du support disposé à l'extérieur de l'enceinte. Cela permet de soulager les bras articulés durant le positionnement des aliments à cuire sur le support voire durant leur retrait du support après cuisson.

Dans une réalisation de l'appareil de cuisson, le mécanisme comprend des moyens de guidage complémentaire configurés entre le support et l'enceinte pour empêcher un débattement latéral du support durant son déplacement vers l'extérieur de l'enceinte et inversement, en suivant la trajectoire rectiligne. Dans une réalisation de l'appareil de cuisson, celui-ci comprend un récipient agencé sur le support et configuré pour recevoir les aliments à cuire. De préférence, selon cette réalisation, des moyens de réception sont configurés entre le support et le récipient pour monter de manière amovible ledit récipient. Cela facilitera le retrait des aliments cuits et le nettoyage du récipient. De préférence, selon cette réalisation, l'appareil de cuisson comprend des moyens d'appui configurés pour soulever le récipient du support lorsque ledit récipient et ledit support sont disposés dans l'enceinte. Cela permet de soulager le mécanisme en position de cuisson des aliments.

Dans une réalisation de l'appareil de cuisson, celui-ci consiste en une friteuse électrique.

### Brève description des figures

Les caractéristiques et avantages de l'invention apparaîtront à la lecture de la description suivante s'appuyant sur des figures, parmi lesquelles :
- la figure 1 illustre une vue d'ensemble d'un appareil de cuisson consistant en une friteuse ;
- les figures 2 à 4 présentent des pièces internes de l'appareil de cuisson de la figure 1 fortement désossé, de sorte à mettre en évidence le mécanisme entre l'enceinte et le support lorsque ledit support est engagé dans ladite enceinte ;
- les figures 5 et 6 illustrent les bras articulés du mécanisme ;
- les figures 7 à 10 présentent des pièces internes de l'appareil de cuisson de la figure 1 fortement désossé, de sorte à mettre en évidence le mécanisme entre l'enceinte et le support lorsque ledit support est dégagé hors de ladite enceinte.

### Description détaillée

La description suivante porte sur un appareil de cuisson de type friteuse électrique, mais la conception pourrait être dupliquée à d'autres appareils de cuisson qui, de par leur fonctionnement, nécessitent d'avoir un support des aliments qui soit mobile pour être dégagé en dehors de l'enceinte de cuisson tout en restant solidaire de celle-ci, afin d'accéder aux aliments cuits ou de positionner lesdits aliments pour les cuire.

Dans la suite de la description, l'appareil de cuisson sera dénommé appareil 1.

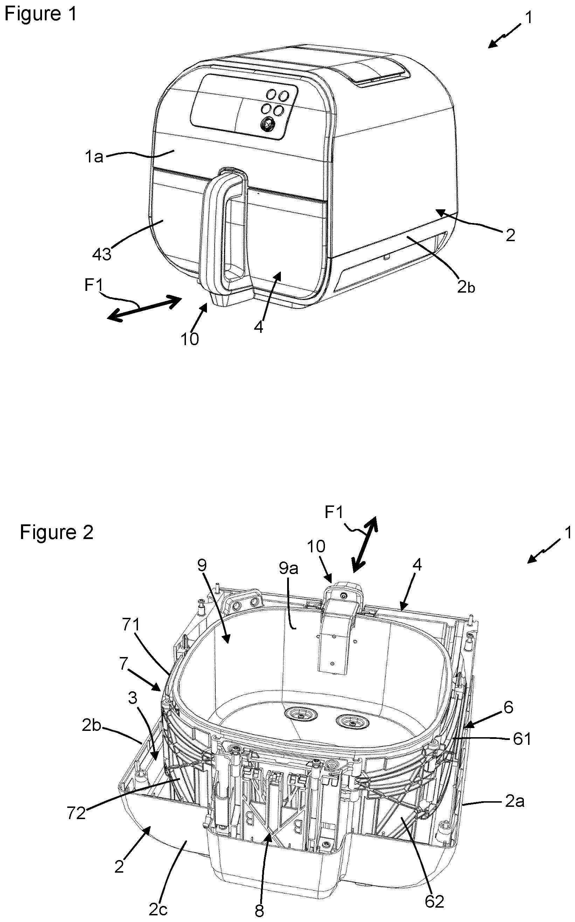

La figure 1 présente l'appareil 1 en position fermée. Cet appareil 1 est du type friteuse électrique et comprend donc tous les composants traditionnels d'une friteuse électrique, lesquels ne seront pas détaillés. L'appareil 1 comprend un socle 2 qui définit une enceinte de cuisson. Cette enceinte de cuisson est dénommée dans la suite de la description enceinte 3 et elle apparaît par exemple sur la figure 2, les éléments chauffants de l'enceinte 3 disposés dans la partie supérieure 1a de l'appareil ne sont toutefois pas illustrés.

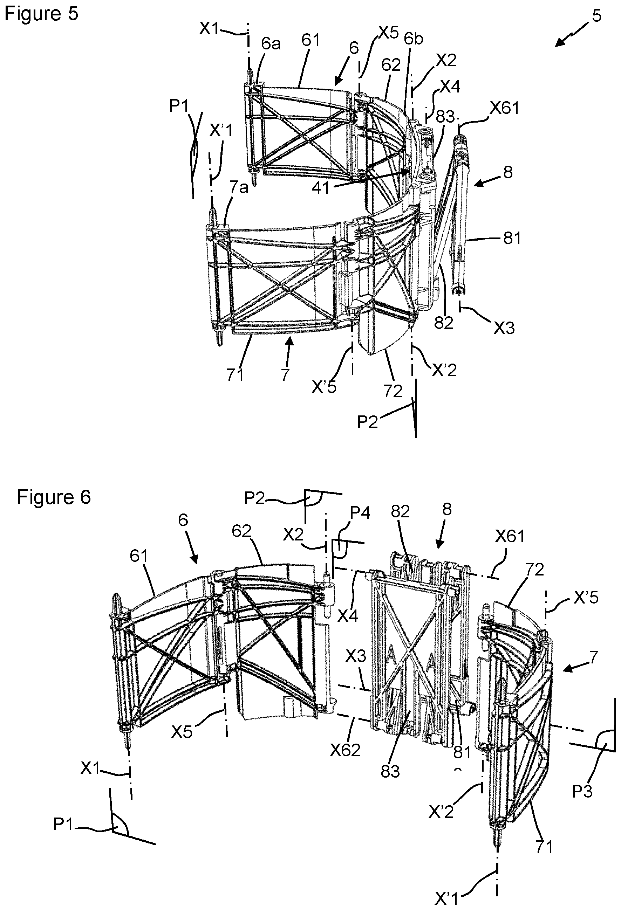

Tel que cela apparaît sur les figures 1 à 4 et 7 à 10, l'appareil 1 comprend également un support 4 qui se déplace dans les deux sens vis-à-vis du socle 2 selon une trajectoire rectiligne définie par la double flèches F1, ce qui permet de positionner ce support 4 à l'extérieur de l'enceinte 3 ou, au contraire, à l'intérieur. Le déplacement du support 4 est assuré par un mécanisme 5, illustré et plus en détail sur les figures 5 et 6.

Comme cela apparaît sur les figures 2 à 10, le mécanisme 5 comprend deux premiers bras articulés 6 et 7 disposés dans l'enceinte 3, respectivement sur les côtés latéraux 2a, 2b du socle 2. Le mécanisme 5 comprend également un deuxième bras articulé 8 disposé dans l'enceinte 3, au niveau du côté arrière 2c du socle 2.

Comme l'illustrent ces figures 2 à 10, l'un des premiers bras articulés 6 comprend une première extrémité 6a qui est montée en liaison pivot selon un axe X1 vis-à-vis du premier côté latéral 2a du socle 2. Cet axe X1 est défini dans un plan P1 qui est perpendiculaire ou sensiblement perpendiculaire à la trajectoire rectiligne F1 du support 4. Une seconde extrémité 6b de ce premier bras articulé 6 est montée en liaison pivot d'axe X2 vis-à-vis d'un côté latéral 41a d'une première platine 41 qui constitue une pièce du support 4. Cet axe X2 est défini dans un plan P2 également perpendiculaire ou sensiblement perpendiculaire à la trajectoire rectiligne F1 du support 4. Les deux axes X1 et X2 sont parallèles et définis verticalement.

De la même manière, comme l'illustrent ces figures 2 à 10, l'autre des premiers bras articulés 7 comprend une première extrémité 7a qui est montée en liaison pivot selon un axe X'1 vis-à-vis du second côté latéral 2b du socle 2. Cet axe X'1 est défini dans le plan P1, comme l'axe X1, mais on pourrait envisager une variante selon laquelle ledit axe X'1 serait défini dans un autre plan que P1 mais également perpendiculaire ou sensiblement perpendiculaire à la trajectoire rectiligne F1 du support 4. Une seconde extrémité 7b de ce premier bras articulé 7 est montée en liaison pivot d'axe X'2 vis-à-vis de l'autre côté latéral 41b de la première platine 41. Cet axe X'2 est défini dans le plan P2, comme l'axe X2, mais on pourrait aussi envisager un autre plan que P2 également perpendiculaire ou sensiblement perpendiculaire à la trajectoire rectiligne F1 du support 4, selon une variante. Les deux axes X'1' et X'2 sont parallèles et définis verticalement.

Comme l'illustrent les figures 2 à 10, les axes X1 et X2 sont parallèles aux axes X'1 et X'2. On pourrait toutefois envisager une variante selon laquelle les axes X1 et X2 seraient inclinés par rapport aux axes X'1 et X'2, notamment lorsque la configuration de l'enceinte 3 impose des agencements différents des liaisons pivot aux extrémités 6a, 6b de l'un des premiers bras 6 par rapport aux extrémités 7a, 7b de l'autre des premiers bras 7.

Comme l'illustrent les figures 2 à 10, le second bras articulé 8 comprend une première extrémité 8a qui est montée en liaison pivot selon un axe X3 par rapport au côté arrière 2c du socle 2. Cet axe X3 est défini dans un plan P3 perpendiculaire ou sensiblement perpendiculaire à la trajectoire rectiligne F1. De même, le second bras articulé 8 comprend une seconde extrémité 8b qui est montée en liaison pivot selon un axe X4 par rapport à la première platine 41 du support 4. Cet axe X4 est défini dans un plan P4 perpendiculaire ou sensiblement perpendiculaire à la trajectoire rectiligne F1. Les axes X3 et X4 sont parallèles et définis horizontalement, étant ainsi selon une orientation différente de celle des axes X1 et X2 et de celle des axes X'1 et X'2, les plans P1, P2, P3 et P4 dans lesquels sont définis ces axes X1, X2, X'1, X'2', X3 et X4 restant toutefois parallèles entre eux.

Comme l'illustrent les figures 2 à 10, l'un des premiers bras articulés 6 est en deux parties 61 et 62 qui sont montées en liaison pivot selon un axe X5 qui est parallèle aux axes X1 et X2. Il en est de même sur l'autre des premiers bras articulés 7, ses deux parties 71 et 72 étant montées en liaison pivot selon un axe X'5 parallèle aux axes X'1 et X'2. En outre, le second bras articulé 8 est en trois parties 81, 82 et 83 montées en liaison pivot entre elles selon deux axes X61 et X62 parallèles aux axes X3 et X4. On pourrait toutefois envisager un nombre de parties différent pour les premiers bras articulés 6 et 7 ainsi que pour le second bras articulé 8 selon la forme de l'enceinte 3 et du support 4 et selon la course de déplacement dudit support 4.

La mise en œuvre du mécanisme 5 permet de neutraliser les degrés de libertés entre le socle 2 et le support 4 pour ne conserver qu'un seul degré de liberté correspondant à un déplacement dudit support 4 vis-à-vis de l'enceinte 3 selon la trajectoire rectiligne F1.

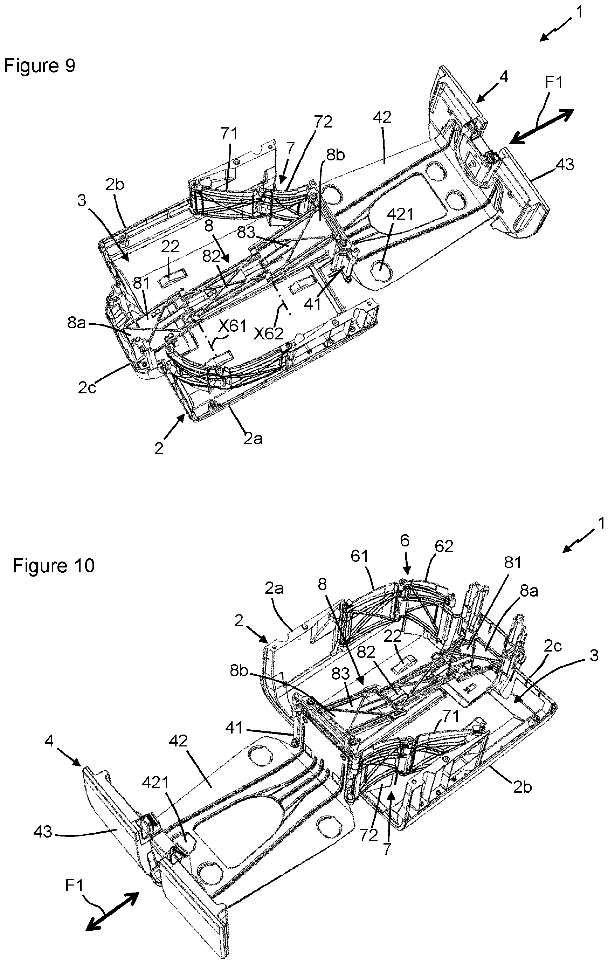

Comme l'illustre par exemple les figures 9 et 10, le support 4 comprend une plaque 42 qui est disposée horizontalement et fixée à la première platine 41 disposée verticalement à l'arrière dudit support 4. Le support 4 comprend également une façade 43 qui est fixée à l'avant avec la plaque 42 ; cette façade 43 ferme l'enceinte 3 lorsque le support 4 est disposé à l'intérieur de cette enceinte 3.

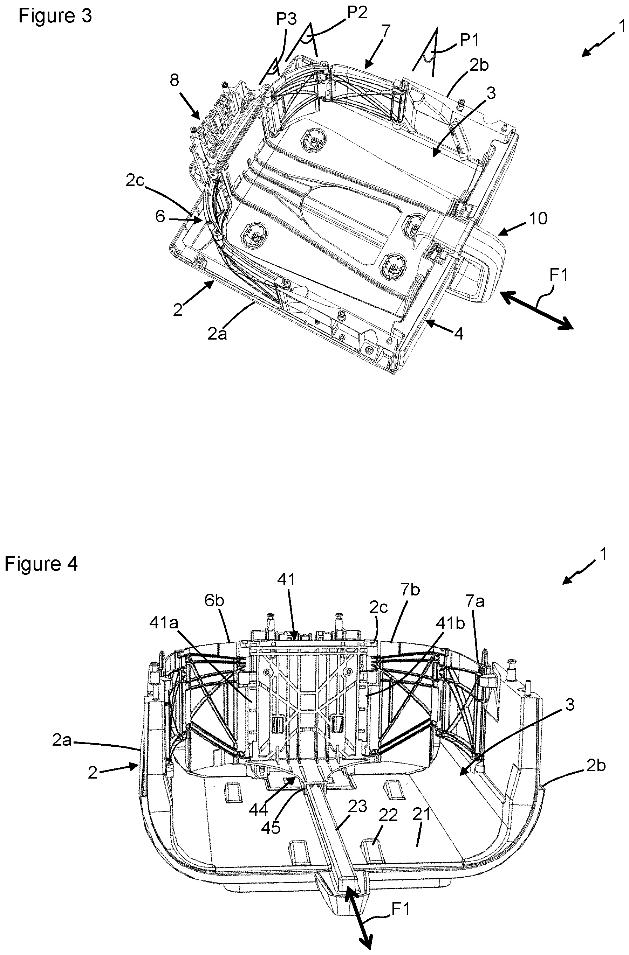

Le support 4 reçoit de manière amovible un récipient 9 (en forme de cuve) illustré en figures 2, 7 et 8. Une poignée 10 est fixée au côté avant d'un panier (non représenté) qui vient se loger dans le récipient 9. Le panier est destiné à recevoir les aliments. Cette poignée 10 est accessible depuis l'extérieur de l'appareil 1 lorsque le support 4 et le récipient 9 sont disposés dans l'enceinte 3, en mode de cuisson. Le récipient 9 comprend quatre plots 91 sur sa face inférieure 9a qui viennent se loger respectivement dans quatre ouvertures 421 sur la plaque lorsque ledit récipient 9 est positionné sur le support 4. Les plots 91 et les ouvertures 421 correspondantes forment des moyens de réception. La poignée 10 vient s'engager dans un logement 431 sur la façade 43 lors du positionnement du panier sur la plaque 42, comme cela apparaît en figure 3. Ainsi, le panier avec la poignée 10 sont convenablement assujettis au support 4 une fois positionnés sur celui-ci, ce qui permet de tirer ou pousser sur la poignée pour déplacer le support 4 avec le récipient 9 vers l'extérieur ou vers l'intérieur de l'enceinte 3.

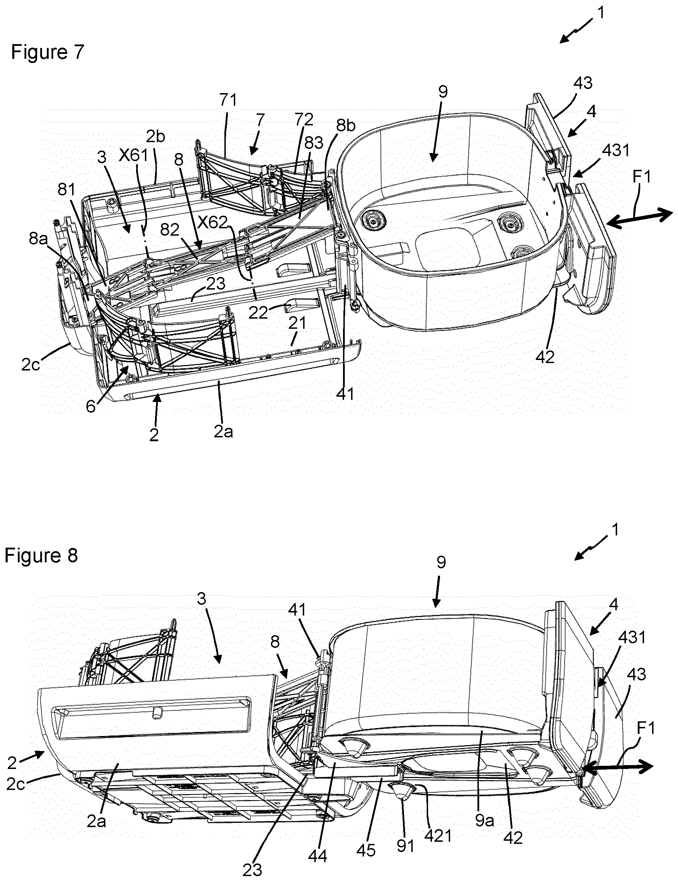

Lors d'une traction sur la poignée 10, le support 4 et le récipient 9 sortent de l'enceinte 3 en suivant la trajectoire rectiligne F1 ; les bras articulés 6, 7 et 8 se déploient des positions illustrées en figures 2 à 6 jusqu'à atteindre les positions illustrées en figures 7 à 10. Sur les figures 7 à 10, seul un des premiers bras articulés 7 est illustré en position déployée ; le deuxième des premiers bras articulés 6 apparaît dans une position non déployée juste pour une comparaison des deux positions, mais il va de soi que ce premier bras articulé 6 est normalement en position déployée, comme l'autre premier bras articulé 7. Inversement, lors d'une poussée sur la poignée 10, le support 4 et le récipient 9 rentrent dans l'enceinte 3 en suivant la trajectoire F1 ; les bras articulés 6, 7 et 8 se replient des positions illustrées en figures 7 à 10 jusqu'à atteindre les positions illustrées en figures 2 à 6.

Le socle 2 comprend une base 21 sur laquelle sont agencées des rampes 22 illustrées sur les figures 7, 9 et 10. Lorsque le support 4 et le récipient 9 rentrent dans l'enceinte 3, les plots 91 sous le récipient 9 viennent en contact avec ces rampes 22, ce qui soulève ledit récipient 9 de la plaque 42. Cela permet de soulager le mécanisme 5 durant la cuisson des aliments. Inversement, lorsque le support 4 et le récipient 9 sortent de l'enceinte 3, les plots 91 quittent les rampes 22 respectives et viennent se reloger convenablement dans les ouvertures 421 sur la plaque 42, pour une parfaite immobilisation dudit récipient 9 sur le support 4.

La première platine 41 est solidaire d'une seconde platine 44 disposée en équerre sous la plaque 42, comme l'illustrent les figures 4 et 8. Selon une autre variante la premiere et deuxième platine 41, 44 forment une seule et même pièce. Cette seconde platine 44 dispose d'un rail 45 sur sa face inférieure. La base 21 sur le socle 2 comprend une nervure longitudinale 23 qui s'étend dans le sens de la trajectoire rectiligne F1, comme l'illustrent les figures 4 et 7. La nervure longitudinale 23 et le rail 45 forment des moyens d'appui et/ou de guidage complémentaire. Le rail 45 est logé en partie dans la nervure longitudinale 23, ce qui assure un maintien complémentaire du support 4 dans la trajectoire rectiligne F1 durant le déploiement des bras articulés 6, 7 et 8 ou, inversement, durant leur repliement. Lorsque le support est complètement extrait de l'enceinte, la charge exercée sur les bras articulés 6, 7 et 8 en position déployée tend à les faire fléchir vers le bas ; le rail 45 prend alors appui sur la nervure longitudinale 23 pour compenser la charge. On assure ainsi une reprise des efforts, ce qui permet de soulager les bras articulés 6, 7 et 8 en position déployée.

Comme l'illustrent notamment les figures 2 et 3, les deux parties 61, 62, 71, 72 des deux premiers bras articulés 6 et 7 sont de forme incurvée afin que dans la position repliée du support 4 et du récipient 9 à l'intérieur de l'enceinte 3, lesdites deux parties 61, 62, 71, 72 soient positionnées autour dudit récipient 9 en suivant la forme de celui-ci. Cela permet de former convenablement l'enceinte 3 autour du récipient 9 sans nécessiter l'ajout d'écrans thermiques additionnels pour assurer une répartition de chauffe homogène autour dudit récipient 9.

La base 21 du socle 2, comportant les rampes 22 et la nervure longitudinale 23, est de préférence mise en œuvre par emboutissage d'une tôle en inox. On peut également envisager de réaliser la base 21 du socle en acier aluminé. Par ailleurs, les rampes 22 et la nervure longitudinale 23 peuvent être des pièces plastiques rapportées, articulées sur le socle 2 et montées sur ressort afin d'absorber les écarts dimensionnels et d'assurer le placage de la cuve de cuisson sur le bloc de chauffe.

Les bras articulés 6, 7 et 8 constituant le mécanisme 5, ainsi que les platines 41, 44, la plaque 42 et la façade 43 constituant le support 4 sont mis en œuvre dans un plastique comprenant un taux de charge en fibres de verre élevé afin d'avoir une rigidité suffisante et d'assurer une tenue en température durant la cuisson. On peut toutefois envisager une réalisation des bras articulés 6, 7 et 8 en profilés aluminium extrudé en fonction des contraintes mécaniques et thermiques.

Des variantes de mise en œuvre sont envisageables sans sortir du cadre de l'invention.

On pourrait par exemple prévoir des premiers bras articulés 6 et 7 et un second bras articulé 8 qui soient composés d'éléments télescopiques à croisillons.

On pourrait aussi prévoir un seul premier bras articulé qui, dans ce cas serait préférentiellement disposé entre le côté arrière 2c du socle 2 et le support 4.

On pourrait modifier les inclinaisons des axes X1 et X2 (de même pour les axes X'1 et X'2) et celle des axes X3 et X4, en les conservant préférentiellement perpendiculaires entre eux. Cela pourrait être envisagé pour tenir compte de la forme de l'enceinte 3.

## Revendications

1. Appareil (1) de cuisson comprenant une enceinte (3) de cuisson, un support (4) configuré pour recevoir directement ou indirectement des aliments à cuire et un mécanisme (5) configuré pour guider le support vers l'extérieur de l'enceinte selon une trajectoire rectiligne (F1) et, inversement, vers l'intérieur de l'enceinte, **caractérisé en ce que** le mécanisme (5) comprend :
- au moins un premier bras articulé (6, 7) dont une première extrémité (6a, 7a) est montée en liaison pivot selon un premier axe (X1, X'1) vis-à-vis de l'enceinte (3) et une seconde extrémité (6b, 7b) est montée en liaison pivot selon un second axe (X2, X'2) vis-à-vis du support (4), lesdits premier et second axes étant parallèles entre eux et définis respectivement dans des premier et second plans (P1, P2) perpendiculaires à ladite trajectoire rectiligne (F1),
- au moins un second bras articulé (8) dont une première extrémité (8a) est montée en liaison pivot selon un troisième axe (X3) vis-à-vis de l'enceinte (3) et une seconde extrémité (8b) est montée en liaison pivot selon un quatrième axe (X4) vis-à-vis du support, lesdits troisième et quatrième axes étant parallèles entre eux et définis respectivement dans des troisième et quatrième plans (P3, P4) perpendiculaires à ladite trajectoire rectiligne,
- les premier et second axes (X1, X2, X'1, X'2) étant inclinés par rapport aux troisième et quatrième axes (X3, X4).

2. Appareil (1) selon la revendication 1, dans lequel les premier et second axes (X1, X2, X'1, X'2) sont sensiblement perpendiculaires aux troisième et quatrième axes (X3, X4).

3. Appareil (1) selon la revendication 2, dans lequel les premier et second axes (X1, X2, X'1, X'2) sont sensiblement verticaux et les troisième et quatrième axes (X3, X4) sont sensiblement horizontaux.

4. Appareil (1) selon l'une des revendications précédentes, lequel comprend deux premiers bras articulés (6, 7) et un second bras articulé (8).

5. Appareil (1) selon la revendication 4, dans lequel les deux premiers bras articulés (6, 7) sont positionnés respectivement sur les côtés latéraux (2a, 2b) entre l'enceinte (3) et le support (4) et le second bras articulé (8) est positionné sur le côté arrière (2c) entre l'enceinte (3) et le support (4).

6. Appareil (1) selon la revendication 5, dans lequel les deux premiers bras articulés (6, 7) sont incurvés.

7. Appareil (1) selon l'une des revendications précédentes, dans lequel l'au moins un premier bras articulé (6, 7) comprend au moins deux premières parties (61, 62, 71, 72) en liaison pivot entre elles selon au moins un cinquième axe (X5, X'5) parallèle aux premier et second axes (X1, X2, X'1, X'2).

8. Appareil (1) selon la revendication 7, dans lequel l'au moins un premier bras articulé (6, 7) est constitué de deux premières parties articulées (61, 62, 71, 72) entre elles selon un cinquième axe (X5, X'5).

9. Appareil (1) selon l'une des revendications précédentes, dans lequel l'au moins un second bras articulé (8) comprend au moins deux secondes parties (81, 82, 83) en liaison pivot entre elles selon au moins un sixième axe (X61, X62) parallèle aux troisième et quatrième axes X3, X4.

10. Appareil (1) selon la revendication 9, dans lequel l'au moins un second bras articulé (8) est constitué de trois secondes parties (81, 82, 83) articulées respectivement entre elles selon deux sixièmes axes (X61, X62).

11. Appareil (1) selon l'une des revendications précédentes, dans lequel le mécanisme (5) comprend des moyens d'appui (23, 45) configurés entre le support (4) et l'enceinte (3) pour reprendre les efforts exercés sur les bras articulés (6, 7, 8) en fin de course du support disposé à l'extérieur de l'enceinte.

12. Appareil (1) selon l'une des revendications précédentes, dans lequel le mécanisme (5) comprend des moyens de guidage complémentaire (23, 45) configurés entre le support (4) et l'enceinte (3) pour empêcher un débattement latéral du support durant son déplacement vers l'extérieur de l'enceinte et inversement.

13. Appareil (1) selon l'une des revendications précédentes, lequel comprend un récipient (9) agencé sur le support (4) et configuré pour recevoir les aliments à cuire.

14. Appareil (1) selon la revendication 13, dans lequel des moyens de réception (91, 421) sont configurés entre le support (4) et le récipient (9) pour monter de manière amovible ledit récipient.

15. Appareil (1) selon la revendication 14, lequel comprend des moyens d'appui (22, 91) configurés pour soulever le récipient (9) du support (4) lorsque ledit récipient et ledit support sont disposés dans l'enceinte (3).

16. Appareil (1) selon l'une des revendications précédentes, lequel est une friteuse électrique.

## Patentansprüche

1. Gerät (1) zum Kochen, umfassend einen Kochraum (3), einem Träger (4), der zur direkten oder indirekten Aufnahme von zu kochenden Nahrungsmitteln konfiguriert ist, und einen Mechanismus (5), der zur Führung des Trägers zum Äußeren von dem Raum entlang eine geradlinigen Bahn (F1) und umgekehrt zum Inneren von dem Raum konfiguriert ist, **dadurch gekennzeichnet, dass** der Mechanismus (5) umfasst:
- mindestens einen ersten gelenkig verbundenen Arm (6, 7), dessen erstes Ende (6a, 7a) in Schwenkverbindung um eine erste Achse (X1, X'1) in Bezug auf den Raum (3) angebracht ist und dessen zweites Ende (6b, 7b) in Schwenkverbindung um eine zweite Achse (X2, X'2) in Bezug auf den Träger (4) angebracht ist, wobei die erste und die zweite Achse zueinander parallel sind und jeweils in einer ersten und einer zweiten Ebene (P1, P2) senkrecht zu der geradlinigen Bahn (F1) definiert sind,
- mindestens einen zweiten gelenkig verbundenen Arm (8), dessen erstes Ende (8a) in Schwenkverbindung entlang einer dritten Achse (X3) in Bezug auf den Raum (3) angebracht ist, und dessen zweites Ende (8b) in Schwenkverbindung um eine vierte Achse (X4) in Bezug auf den Träger angebracht ist, wobei die dritte und vierte Achse parallel zueinander sind und jeweils in der dritten und vierten Ebene (P3, P4) senkrecht zu der geradlinigen Bahn definiert sind,
- wobei die erste und die zweite Achse (X1, X2, X'1, X'2) in Bezug auf die dritte und die vierte Achse (X3, X4) geneigt sind.

2. Gerät (1) nach Anspruch 1, wobei die erste und die zweite Achse (X1, X2, X'1, X'2) im Wesentlichen senkrecht zu der dritten und der vierten Achse (X3, X4) sind.

3. Gerät (1) nach Anspruch 2, wobei die erste und die zweite Achse (X1, X2, X'1, X'2) im Wesentlichen vertikal sind, und wobei die dritte und die vierte Achse (X3, X4) im Wesentlichen horizontal sind.

4. Gerät (1) nach einem der vorstehenden Ansprüche, das zwei erste gelenkig verbundene Arme (6, 7) und einen zweiten gelenkig verbundenen Arm (8) umfasst.

5. Gerät (1) nach Anspruch 4, wobei die beiden ersten gelenkig verbundenen Arme (6, 7) jeweils an den lateralen Seiten (2a, 2b) zwischen dem Raum (3) und dem Träger (4) positioniert sind, und wobei der zweite gelenkig verbundene Arm (8) auf der Rückseite (2c) zwischen dem Raum (3) und dem Träger (4) positioniert ist.

6. Gerät (1) nach Anspruch 5, wobei die beiden ersten gelenkig verbundenen Arme (6, 7) gekrümmt sind.

7. Gerät (1) nach einem der vorstehenden Ansprüche, wobei der mindestens eine erste gelenkig verbundene Arm (6, 7) mindestens zwei erste Teile (61, 62, 71, 72) in Schwenkverbindung zueinander um mindestens eine fünfte Achse (X5, X'5) parallel zu den ersten und zweiten Achsen (X1, X2, X'1, X'2) umfasst.

8. Gerät (1) nach Anspruch 7, wobei der mindestens eine erste gelenkig verbundene Arm (6, 7) aus zwei ersten Teilen (61, 62, 71, 72) besteht, die um eine fünfte Achse (X5, X'5) zueinander gelenkig verbunden sind.

9. Gerät (1) nach einem der vorstehenden Ansprüche, wobei der mindestens eine zweite gelenkig verbundene Arm (8) mindestens zwei zweite Teile (81, 82, 83) in Schwenkverbindung zueinander um mindestens eine sechste Achse (X61, X62) parallel zu der dritten und vierten Achse X3, X4 umfasst.

10. Gerät (1) nach Anspruch 9, wobei der mindestens eine zweite gelenkig verbundene Arm (8) aus drei zweiten Teilen (81, 82, 83) besteht, die jeweils entlang zweier sechster Achsen (X61, X62) zueinander gelenkig verbunden sind.

11. Gerät (1) nach einem der vorstehenden Ansprüche, wobei der Mechanismus (5) Stützmittel (23, 45) umfasst, die zwischen dem Träger (4) und dem Raum (3) konfiguriert sind, um die auf die gelenkig verbundenen Arme (6, 7, 8) ausgeübten Kräfte am Ende der Bewegung des Trägers wieder aufzunehmen, der außerhalb des Raums angeordnet ist.

12. Gerät (1) nach einem der vorstehenden Ansprüche, wobei der Mechanismus (5) komplementäre Führungsmittel (23, 45) umfasst, die zwischen dem Träger (4) und dem Raum (3) konfiguriert sind, um eine seitliche Auslenkung des Trägers bei seiner Bewegung zum Äußeren des Raums und umgekehrt zu verhindern.

13. Gerät (1) nach einem der vorstehenden Ansprüche, das einen Behälter (9) umfasst, der auf dem Träger (4) angeordnet ist und konfiguriert ist, die zu kochenden Nahrungsmittel aufzunehmen.

14. Gerät (1) nach Anspruch 13, wobei die Aufnahmemittel (91, 421) zwischen dem Träger (4) und dem Behälter (9) zum lösbaren Befestigen des Behälters konfiguriert sind.

15. Gerät (1) nach Anspruch 14, das Stützmittel (22, 91) umfasst, die so konfiguriert sind, dass sie den Behälter (9) des Trägers (4) anheben, wenn der Behälter und der Träger in dem Raum (3) angeordnet sind.

16. Gerät (1) nach einem der vorhergehenden Ansprüche, das eine elektrische Friteuse ist.

## Claims

1. Cooking appliance (1) comprising a cooking enclosure (3), a support (4) configured to directly or indirectly receive food to cook and a mechanism (5) configured to guide the support towards the outside of the enclosure according to a rectilinear path (F1) and, conversely, towards the inside of the enclosure, **characterised in that** the mechanism (5) comprises:
- at least one first articulated arm (6, 7) of which a first end (6a, 7a) is mounted in pivot connection about a first axis (X1, X'1) opposite the enclosure (3) and a second end (6b, 7b) is mounted in pivot connection about a second axis (X2, X'2) opposite the support (4), said first and second axes being parallel to one another and defined respectively in first and second planes (P1, P2) perpendicular to said rectilinear path (F1),
- at least one second articulated arm (8) of which a first end (8a) is mounted in pivot connection about a third axis (X3) opposite the enclosure (3) and a second end (8b) is mounted in pivot connection about a fourth axis (X4) opposite the support, said third and fourth axes being parallel to one another and defined respectively in third and fourth planes (P3, P4) perpendicular to said rectilinear path,
- the first and second axes (X1, X2, X'1, X'2) being inclined with respect to the third and fourth axes (X3, X4).

2. Appliance (1) according to claim 1, wherein the first and second axes (X1, X2, X'1, X'2) are substantially perpendicular to the third and fourth axes (X3, X4).

3. Appliance (1) according to claim 2, wherein the first and second axes (X1, X2, X'1, X'2) are substantially vertical and the third and fourth axes (X3, X4) are substantially horizontal.

4. Appliance (1) according to any one of the preceding claims, which comprises two first articulated arms (6, 7) and a second articulated arm (8).

5. Appliance (1) according to claim 4, wherein the two first articulated arms (6, 7) are positioned respectively on the lateral sides (2a, 2b) between the enclosure (3) and the support (4) and the second articulated arm (8) is positioned on the rear side (2c) between the enclosure (3) and the support (4).

6. Appliance (1) according to claim 5, wherein the two first articulated arms (6, 7) are curved.

7. Appliance (1) according to any one of the preceding claims, wherein the at least one first articulated arm (6, 7) comprises at least two first portions (61, 62, 71, 72) in pivot connection together about at least one fifth axis (X5, X'5) parallel to the first and second axes (X1, X2, X'1, X'2).

8. Appliance (1) according to claim 7, wherein the at least one first articulated arm (6, 7) is constituted of two first articulated portions (61, 62, 71, 72) together about a fifth axis (X5, X'5).

9. Appliance (1) according to any one of the preceding claims, wherein the at least one second articulated arm (8) comprises at least two second portions (81, 82, 83) in pivot connection together about at least one sixth axis (X61, X62) parallel to the third and fourth axes (X3, X4).

10. Appliance (1) according to claim 9, wherein the at least one second articulated arm (8) is constituted of three second portions (81, 82, 83) respectively articulated together about two sixth axes (X61, X62).

11. Appliance (1) according to any one of the preceding claims, wherein the mechanism (5) comprises support means (23, 45) configured between the support (4) and the enclosure (3) to absorb the forces exerted on the articulated arms (6, 7, 8) ultimately of the support arranged outside of the enclosure.

12. Appliance (1) according to any one of the preceding claims, wherein the mechanism (5) comprises complementary guiding means (23, 45) configured between the support (4) and the enclosure (3) to prevent a lateral articulation of the support during the movement thereof towards the outside of the enclosure and conversely.

13. Appliance (1) according to any one of the preceding claims, which comprises a container (9) arranged on the support (4) and configured to receive the food to be cooked.

14. Appliance (1) according to claim 13, wherein the receiving means (91, 421) are configured between the support (4) and the container (9) to removably mount said container.

15. Appliance (1) according to claim 14, which comprises support means (22, 91) configured to remove the container (9) from the support (4) when said contained and said support are arranged in the enclosure (3).

16. Appliance (1) according to any one of the preceding claims, which is an electric fryer.
